# EUROPEAN PATENT APPLICATION

(11) **EP 1 531 606 A1**
(43) Date of publication of application: **18.05.2005**
(21) Application number: 03757200.5
(22) Date of filing: 06.06.2003
(51) Int. Cl.: H04M 1/60, H04M 1/00, H04M 1/03, H04M 1/02, H04M 1/725, H04B 7/26

(54) **COLLAPSIBLE MOBILE TELEPHONE**

(30) Priority: 07.06.2002 JP 2002167360
(71) Applicant: MATSUSHITA ELECTRIC INDUSTRIAL CO., LTD., Kadoma-shi, Osaka 571-8501 (JP)
(72) Inventor: HARADA, Hideo, Hamamatsu-shi, Shizuoka 432-8023 (JP); NAKANISHI, Tetsuaki, Yokohama-shi, Kanagawa 245-0004 (JP)
(74) Representative: Grünecker, Kinkeldey, Stockmair & Schwanhäusser Anwaltssozietät
(86) International application number: PCT/JP2003/007214
(87) International publication number: WO 2003/105450

(57) **Abstract**

An object of the invention is to provide a folder type mobile phone which can realize communication in a closed state with a suitable volume, reduce the number of the buttons as many as possible and avoid an erroneous operation and enlargement of a case. In addition to a transmission microphone 12, a receive 22 and a large-volume speaker 23 for sounding a melody or buzzer etc. signaling an incoming call, a folder type mobile phone according to the invention further includes a volume variable unit 4B, and a switching unit 4A for switching setting functions in a manner that a first function for communicating by using the transmission microphone 12 and the receiver is set at the time of communicating in an opened state of a cover case and a second function for sounding received voice by adjusting the sounding volume of the transmission microphone 12 and the large-volume speaker 23 to a small level almost same as the sounding volume of the receiver 22 at the time of communicating in a closed state of the cover case.

## Description

### TECHNICAL FIELD

The present invention relates to a folder type mobile phone having a function of being capable of performing a closed-state communication where a communication can be made in a closed state of cases.

### BACKGROUND ART

In recent years, multifunctional technique for mobile phones has been progressed rapidly, and folder type mobile phones have been spread in each of which a large screen can be formed and an operation area can also be made large. In a rod type mobile phone where an operation section thereof is always exposed, buttons of an operation section may be erroneously operated even when the phone is not used. In contrast, in a folder type mobile phone, a cover case is usually closed when the phone is not used, so that the operation section is not exposed in the closed state and so an erroneous operation is hardly performed.

However in the folder type mobile phone, the cover case is required to be once opened in order to start a communication from the closed state of the cases, and hence such an opening procedure is troublesome.

In view of such a problem, as disclosed in JP-A-2001-211241, there is proposed a folder type mobile phone of a type provided with plural reception sections (hereinafter called a dual purpose type capable of speaking in a closed state) in order to make it possible to communicate also in the closed state of cases.

Further, the folder type mobile phone of the dual purpose type capable of communicating in a closed state is configured so as to reduce the number of speakers in a manner that a speaker for sounding a melody or buzzer etc. signaling an incoming call serves also as a speaker for sounding a received voice in the closed state of the cases.

In each of the mobile phone of normal type and the mobile phone of the dual purpose type capable of communicating in a closed state, the speaker for sounding a melody or buzzer etc. signaling an incoming call has a circuit design of sounding with a large volume so that a person can listen the sound at a place away from the mobile phone.

To this end, in the mobile phone of the dual purpose type capable of communicating in a closed state, if the volume of the speaker for sounding a received voice in the closed state of the cases is too large, a microphone of a transmission section detects this sound, and so the detected sound may mix into received voice on a called party side to cause an echo etc. In contrast, if the volume of the speaker is too small, it is difficult to hear voice from a called party side.

It is expected that there often arises a request that, in a usual life, a user slowly opens a cover case thereby to shift to a usual communication while the user communicates in a closed state of the cases. However, the aforesaid mobile phone of the dual purpose type capable of communicating in a closed state is not configured to positively consider this shift from a communication in the closed state to a communication in the normal opened state.

That is, in order to cope with such a request, it is necessary to further provide a dedicated button etc. capable of being depressed even in the closed state of the cases at the outside (exposed) portion of a body case. However, if such a button is provided at the outside portion, an erroneous operation may be occurred as described above thereby to cause the degradation of usability for a user. Further, an area for disposing this button is required at the outside portion of the case, which causes an enlargement of the size and also restriction of the design.

In view of the circumstances of the conventional technique, an object of the invention is to provide a folder type mobile phone which can realize a communication in a closed state of cases at a suitable volume, reduce the number of buttons as many as possible and avoid an erroneous operation and enlargement of cases.

### DISCLOSURE OF THE INVENTION

In order to attain the above object, the folder type mobile phone according to the invention is arranged in a manner that in the folder type mobile phone in which a first case having a transmission microphone and a second case having a receiver are coupled to each other so as to be opened and closed freely, the folder type mobile phone includes: a speaker provided at a portion of the second case which is exposed when the first and second cases are closed; volume variable unit for adjusting a sounding volume of the speaker to a level almost same as a sounding volume of the receiver; and switching unit for switching setting functions in a manner that a first function for communicating by using the transmission microphone and the receiver is set in a case of communicating by opening the first and second cases to each other, and a second function for adjusting a sounding volume of the speaker to a level almost same as a sounding volume of the receiver by the volume variable unit thereby to communicate by using the transmission microphone and the speaker in a case of communicating by closing the first and second cases to each other.

According to such a configuration, the speaker is operated to sound with a large volume at the time of sounding a melody or buzzer signaling an incoming call. At the time of communicating in the closed state of the cases, the speaker is operated to sound with a volume at a level almost same as the sounding volume of the receiver and an echo etc. does not cause on the called party side advantageously.

Further, the folder type mobile phone according to the invention is arranged in a manner that in the folder type mobile phone in which a first case having a transmission microphone and a second case having a receiver are coupled to each other so as to be opened and closed freely, the folder type mobile phone includes: a speaker provided at a portion of the second case which is exposed when the first and second cases are closed; volume variable unit for adjusting a sounding volume of the speaker to a level almost same as a sounding volume of the receiver; a first button having a function of a first communication starting operation unit and provided at a portion which is not exposed when the first and second cases are closed but exposed in a closed state of the first and second cases; a second button having a function of a second communication starting operation unit and provided at a portion which is exposed when the first and second cases are closed; and switching unit for switching setting functions in a manner that a first function for communicating by using the transmission microphone and the receiver is set in a case of starting communicating by operating the first button, and a second function for adjusting a sounding volume of the speaker to a level almost same as a sounding volume of the receiver by the volume variable unit thereby to communicate by using the transmission microphone and the speaker in a case of starting communicating by operating the second button.

Thus, it is possible to perform a closed-state communication, that is, communication in a closed state of the cases by merely operating the button at the time of receiving an incoming call in the closed state of the cases.

Further, the folder type mobile phone according to the invention is desired to be arranged in a manner that the transmission microphone is provided at a portion of the first case which is away from the coupling portion of the cases and exposed when the first and second cases are closed, and the receiver is provided at a portion of the second case which is away from the coupling portion and covered by the first case when the first and second cases are closed.

Further, the folder type mobile phone according to the invention is characterized in that the switching unit is configured to switch to the first function when the first and second cases are opened to each other in a state of being set to the second function.

Thus, when the cases are opened during the communication in the closed state of the cases, the switching unit switches the setting state to the first function thereby to shift to normal communication in the opened state.

Further, the folder type mobile phone according to the invention is characterized in that the switching unit is configured to switch to the second function when the first and second cases are closed to each other in a state of being set to the first function.

Thus, when the cases are closed during the communication in the opened state of the cases, the switching unit switches the setting state to the second function thereby to shift to communication in the closed state.

Further, the folder type mobile phone according to the invention is arranged in a manner that the second button has a function of a first communication terminating operation unit for, when being operated during communication, terminating the communication.

Thus, communication can be started and terminated with a less number of the buttons and so the number of the buttons can be reduced advantageously.

Further, the folder type mobile phone according to the invention is arranged in a manner that the second button has a function of a second communication terminating operation unit for, when being continuously operated for a predetermined time period during communication, terminating the communication.

Thus, communication can be terminated by depressing the second button for a long time during the communication in the closed state. As a result, communication can be started and terminated with a less number of the buttons and so the number of the buttons can be reduced advantageously. Further, erroneous termination of communication can be prevented advantageously even when the button is erroneously operated during the communication.

Further, the folder type mobile phone according to the invention is characterized in that the second button is disposed within a recess portion formed at an outer surface of at least one of the first and second cases.

Thus, since the button is provided in the recess portion so that the button can be depressed by a fingertip etc. but does not protrude from the surface of the case, the erroneous operation of the button can be prevented.

Further, the folder type mobile phone according to the invention is arranged in a manner that in the folder type mobile phone in which a first case and a second case are coupled to each other so as to be opened and closed freely, the folder type mobile phone includes: a speaker provided at a portion of the cases which is exposed when the first and second cases are closed; switching unit for switching the speaker so that the speaker is used as a receiver at a time of communication; and adjusting unit for adjusting a sounding volume of the speaker to a lower level than a sounding volume at a time of signaling an incoming call in a state of using the speaker as the receiver.

Thus, the speaker is operated to sound with a large volume at the time of sounding a melody or buzzer signaling an incoming call. At the time of communicating in the closed state of the cases, the speaker is operated to sound with a volume at a level almost same as the sounding volume of the receiver and an echo etc. does not cause on the called party side advantageously.

### BRIEF DESCRIPTION OF THE DRAWINGS

In Fig. 1, (A) is a perspective view showing a state where a folder type mobile phone according to the first embodiment of the invention is opened, and (B) is perspective view showing a state where the folder type mobile phone is closed;
Fig. 2 is a block diagram showing the electric configuration of the folder type mobile phone according to the first embodiment of the invention;
Fig. 3 shows a modified example of the folder type mobile phone according to the first embodiment of the invention, in which (A) is a perspective view showing a state where the folder type mobile phone is opened, and (B) is perspective view showing a state where the folder type mobile phone is closed;
Fig. 4 is a block diagram showing the electric configuration of the folder type mobile phone according to the second embodiment of the invention;
Fig.5 shows a folder type mobile phone according to the third embodiment of the invention, in which (A) is a plan view, (B) is a side view and (C) is a front view of the folder type mobile phone; and
Fig. 6 is a side view showing a folder type mobile phone according to the fourth embodiment of the invention.

Incidentally, a reference numeral 1 in the drawings depicts a lower body case (a first case), 11 an operation section (communication start button; a first button), 12 a transmission microphone, 12A a voice conduction hole, 13 a depressing button for closed-state communication (depression type; a second button), 14 a depressing button for a closed-state communication (communication termination unit; the second button), 15 a communication start 15 for a closed state (a slide switch; the second button),16 a recess portion, 2 an upper case (a second case), 21 a display section, 22 a receiver, 23 a large volume speaker (a speaker), 3 a hinge portion 3, 4A a switching unit, 4B a volume variable unit, 41 an open/close detection switch (a detection unit for detecting an open/close state of the cases), 42 a control circuit (a switching unit), 43 a received voice sending destination switching section, 44 an incoming call signal/ received voice switching section, 45 a melody or buzzer signaling incoming-call generation circuit, 46 a large-amplitude amplifier (for the large volume speaker), 47 a communication circuit section, 48 a small-amplitude amplifier (for the receiver), 51 an antenna, 52 a transceiver section, 6A a switching unit, 6B a volume variable unit, 61 a signal switching section, and 62 a wide gain variable amplifier for received voice.

### BEST MODE FOR CARRYING OUT THE INVENTION

Hereinafter, embodiments of the invention will be explained in detail with reference to accompany drawings.

### [First Embodiment]

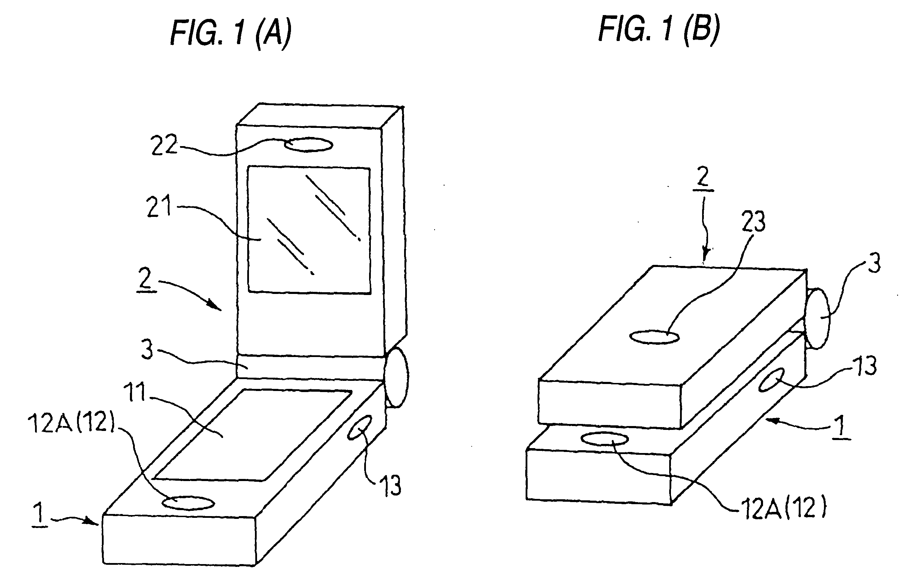

Fig.1 shows a folder type mobile phone according to the first embodiment of the invention. This folder type mobile phone includes, as a schematic configuration, a lower body case 1 having an operation section 11, an upper case 2 having a display section 21 and a hinge portion 3 for coupling these cases so as to be opened and closed therebetween.

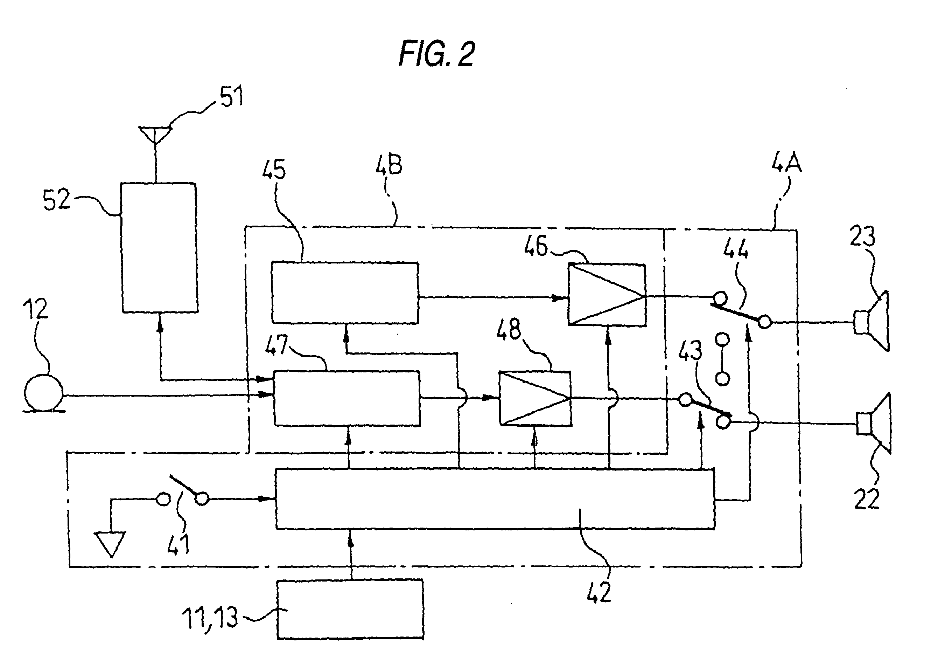

The lower body case 1 is provided on an inner (upper) surface side opposing to the upper case 2 with the operation section 11 having a pressing button group and the voice conduction hole 12A of a transmission microphone 12 (see Fig. 2), and also provided on a side surface with a depressing button 13 for a closed-state communication.

On the other hand, the upper case 2 is provided on an inner (lower) surface side opposing to the lower body case 1 with the display section 21 and a receiver 22, and also provided on an outer surface with a large-volume speaker 23 for sounding a melody or buzzer etc. signaling an incoming call and for sounding received voice in the closed state of the cases.

Next, the electric configuration of the mobile phone according to the embodiment will be explained with reference to Fig. 2.

In addition to the transmission microphone 12, the receiver 22 and the large-volume speaker 23, the mobile phone according to this embodiment further includes a switching unit 4A for switching between the receiver 22 and the large-volume speaker 23 in accordance with the open/close state of the cases and a volume variable unit 4B capable of adjusting the sounding volume of the speaker 23 to a small level almost same as the sounding volume of the receiver 22.

Among these units, the switching unit 4A includes an open/close detection switch 41 for detecting the open/close state of the cases; a control circuit 42, having an input connected to the open/close detection switch 41, for performing the switching control of received voice and the control relating to communication; a received voice sending destination switching section 43, having an input connected to the output of the control circuit 42 and an output connected to the receiver 22, for switching the sending destination of received voice; and an incoming call signal/received voice switching section 44, having an input connected to the output of the control circuit 42 and an output connected to the large-volume speaker 23, for switching between the incoming call signal and the received voice.

The control circuit 42 selectively operates one of the received voice sending destination switching section 43 and the incoming call signal/received voice switching section 44 in a manner that one of a large-amplitude amplifier 46 and a small-amplitude amplifier 48 is selectively and arbitrarily coupled to one of the receiver 22 and the large-volume speaker 23 in accordance with a state described later.

On the other hand, the volume variable unit 48 includes a melody or buzzer signaling incoming call generation circuit 45, having an input connected to the output of the control circuit 42, for sounding a melody or buzzer signaling an incoming call; the large-amplitude amplifier 46 for the large volume speaker having an input connected to the output of the melody or buzzer signaling incoming call generation circuit 45 and an output connected to the incoming call signal/received voice switching section 44; a communication circuit section 47 connected to a transceiver section 52 so as to input a voice signal to be outputted through an antenna 51 and the transceiver section 52 and having an input connected to the output of the control circuit 42; and the small-amplitude amplifier 48 for the receiver having inputs connected to the output of the communication circuit section 47 and to the output of the control circuit 42 and an output connected to the received voice sending destination switching section 43.

The communication circuit section 47 has another input connected to the output of the transmission microphone 12. The communication voice inputted from the transmission microphone 12 is converted in a voice signal at the communication circuit section and then transmitted to a called party from the antenna 51 of the transceiver section 52.

Next, the operation of this embodiment will be explained with reference to Figs. 1 and 2. In this respect, in the call waiting state of the folder type mobile phone, the upper and lower cases are in the closed state as shown in Fig. 1(B).

### (1) Communication in the open state

At the time of receiving an incoming call, usually, the case is once opened to place in a state shown in Fig. 1(A), then a not-shown communication start button within the operation section 11 is depressed, so that the control circuit 42 starts a communication (a first function) using the transmission microphone 12 and the receiver 22. Further, when a not-shown communication end button within the operation section 11 is depressed, the control circuit 42 terminates the communication.

### (2) Communication in the closed state

On the other hand, in the case where it is troublesome to once open the case and desired to start the communication rapidly, the depressing button 13 for closed-state communication is depressed in the closed state of the cases as shown in Fig. 1(B), whereby the control circuit 42 starts the communication (a second function) using the transmission microphone 12 and the speaker 23 of a suitable volume.

Next, the operations of the receiver 22 and the speaker 23 etc. at the time of a communication in the open state and the communication in the closed state will be explained with reference to Fig. 2.

### (1) Upon receiving an incoming call

At the time of receiving an incoming call, the melody or buzzer signaling incoming call generation circuit 45 for sounding a melody or buzzer signaling an incoming call and the large-amplitude amplifier 46 for the large volume speaker operate to output a signal for a melody or buzzer etc. of a large volume signaling an incoming call to the speaker 23 thereby to notify the incoming call.

### (2) Communication in the open state

In the case of starting a communication by depressing the communication start button within the operation section 11 in the opened state of the cases as shown in Fig. 1(A), a detection signal from the open/close detection switch 41 is outputted to the control circuit 42.

Thus, the connection state of each of the received voice sending destination switching section 43 and the incoming call signal/received voice switching section 44 is switched in accordance with a control signal from the control circuit 42. Further, the operation of the large-amplitude amplifier 46 for the large volume speaker is stopped in accordance with this control signal from the control circuit 42 thereby to stop the melody or buzzer signaling an incoming call and further to operate the small-amplitude amplifier 48 for the receiver. As a result, a voice signal of a called party outputted from the communication circuit section 47 through the antenna 51 and the transceiver circuit 52 is amplified by the small-amplitude amplifier 48 for the receiver and then outputted to the receiver 22, whereby voice from the called party is sounded with a suppressed volume.

### (3) Communication in the closed state

On the other hand, in the case where the depressing button 9 for a closed-state communication is depressed in the closed state of the cases as shown in Fig. 1(B), the detection signal corresponding to the closed state is outputted from the open/close detection switch 41 to the control circuit 42. Thus, the operation of the large-amplitude amplifier 46 for the large volume speaker is stopped in accordance with this control signal from the control circuit 42 thereby to stop the melody or buzzer signaling an incoming call and further the connection state of each of the incoming call signal/received voice switching section 44 and the received voice sending destination switching section 43 is switched. That is, the small-amplitude amplifier 48 is connected to the speaker 23 thereby to apply the received voice from the communication circuit section 47 to the speaker 23 through the small-amplitude amplifier 48 for the receiver.

Thus, according to the first embodiment, the large-volume speaker 23 operates to sound with a large volume at the time of sounding a melody or buzzer signaling an incoming call, whilst the sounding volume of the large-volume speaker 23 is adjusted in a suppressed state to a level almost equal to the normal sounding volume of the receiver 22 at the time of communicating in the closed state of the cases. Simultaneously, it becomes possible not to cause an echo etc. on the called party side.

Further, according to the embodiment, in a state where the cases are once opened to perform a communication, it becomes possible to shift to the communication in the closed state of the cases during the communication in the opened state.

In this first embodiment, the small-amplitude amplifier 48 for the receiver is configured to drive the speaker 23 of a low impedance. That is, the speaker 23 has a low impedance and so the driving ability of the large-amplitude amplifier 46 for the large volume speaker is high. In contrast, the receiver 22 has a high impedance and so the driving ability of the small-amplitude amplifier 48 for the receiver may be low. However, according to the configuration like this embodiment, it is required to also enhance the driving ability of the small-amplitude amplifier 48 for the receiver (and also required to be low noise).

Further, according to the first embodiment, in a case that a communication is started in the closed state of the upper and lower cases, when the cases are opened during the communication, the open/close detection switch 41 of Fig. 2 operates and so the control circuit 42 detects that the cases are changed from the closed state to the opened state. As a result, the control circuit 42 operates to switch the received voice sending destination switching section 43 so that the output of the small-amplitude amplifier is changed from speaker 23 to the receiver 22. Thus, at the time of receiving an incoming call, although a communication is started in the closed state of the cases in order to start the communication rapidly, it is possible to slowly open the cases thereby to shift to the normal communication.

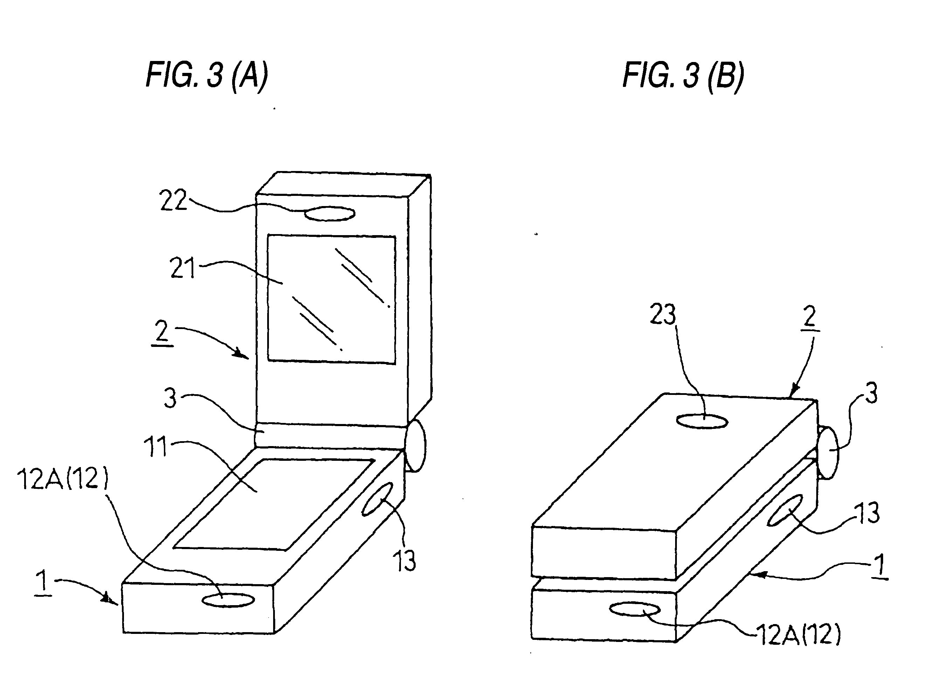

In the first embodiment, the lower body case 1 is formed to have a slightly longer width in the longitudinal direction as compared with the width in the longitudinal direction of the upper case 2, whereby the voice conduction hole 12A of the transmission microphone 12 (see Fig. 2) is formed by using the excessive area of the lower body case. Alternatively, as shown in Figs. 3(A) and (B), the lower body case and the upper case having almost the same length may be employed, whereby the voice conduction hole 12A of the transmission microphone 12 (see Fig. 2) may be formed at the end portion of the lower body case 1.

### [Second Embodiment]

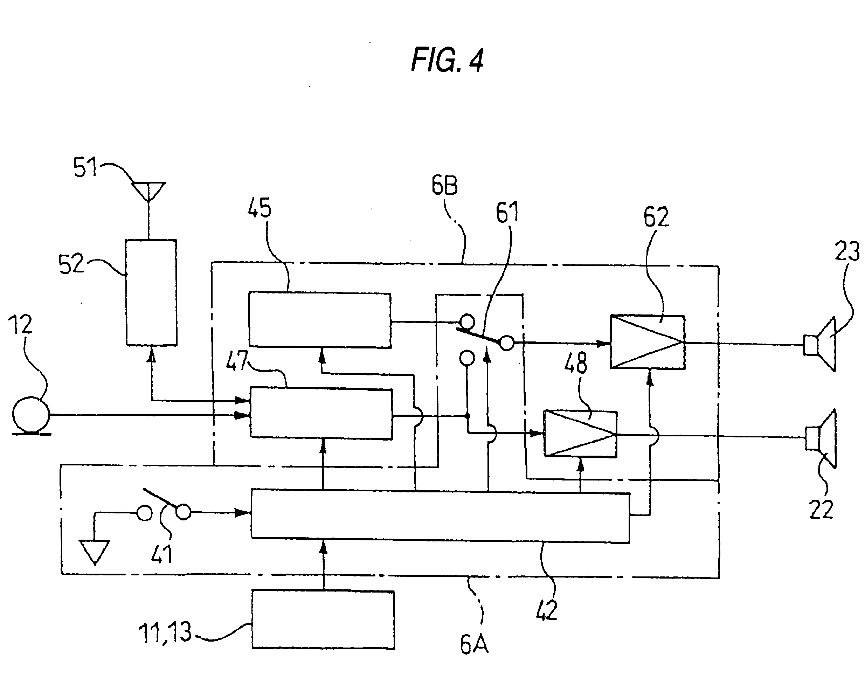

Next, the second embodiment according to the invention will be explained with reference to Fig. 4. In this embodiment, portions identical to those of the first embodiment are referred to by the common symbols, with explanation thereof being omitted.

Fig. 4 shows the electric configuration of the mobile phone according to the second embodiment. In addition to the transmission microphone 12, the receiver 22 and the large-volume speaker 23, this mobile phone includes a switching unit 6A for switching between the receiver 22 and the large-volume speaker 23 in accordance with the open/close state of the cases and a volume variable unit 6B capable of adjusting the sounding volume of the speaker 23 to a small level almost same as the sounding volume of the receiver 22.

In addition to the open/close detection switch 41 and the control circuit 42, the switching unit 6A includes a signal switching section 61 having an input connected to the output of the melody or buzzer signaling incoming call generation circuit 45 and an output connected to the input of a wide gain variable amplifier 62 for received voice of the volume variable unit 6B described later.

On the other hand, in addition to the melody or buzzer signaling incoming call generation circuit 45, the communication circuit section 47 and the small-amplitude amplifier 48 for the receiver, the volume variable unit 6B includes the wide gain variable amplifier 62 for received voice.

Next, the operation of this embodiment will be explained with reference to Fig. 4.

### (1) Upon receiving an incoming call

When an incoming call is received in the closed state of the cases, the large-volume speaker 23 and the wide gain variable amplifier 62 for received voice are operated with a high gain, whereby a signal for a melody or buzzer of a large volume signaling an incoming call is outputted to the large-volume speaker 23 thereby to notify the incoming call.

### (2) Communication in the open state

In the case of starting communication by depressing the communication start button within the operation section 11 in the opened state of the cases as shown in Fig. 1(A), the control circuit 42 stops the operation of the melody or buzzer signaling incoming call generation circuit 45 thereby to stop the melody or buzzer signaling an incoming call and further to operate the small-amplitude amplifier 48 for the receiver. As a result, a voice signal is outputted to the receiver 22 from the circuit 47.

Thus, also in the second embodiment like the first embodiment, the large-volume speaker 23 is operated to sound with a large volume at the time of sounding a melody or buzzer signaling an incoming call. At the time of communicating in the closed state of the cases, the sounding volume of the large-volume speaker 23 can be adjusted in a suppressed state to a level almost equal to the normal sounding volume of the receiver 22. Simultaneously, it becomes possible not to cause an echo etc. on a called party side. Further, also according to the embodiment, in a state where the case is once opened to perform communication, it is possible to shift to the communication in the closed state of the cases, that is, the closed-state communication, during the communication in the opened state.

### (3) Communication in the closed state

In the case where the melody or buzzer signaling incoming call generation circuit 45 operates to sound a melody or buzzer signaling an incoming call in the closed state of the cases as shown in Fig. 1(B), when the depressing button 13 for a closed-state communication is depressed while maintaining the cases in the closed state as shown in Fig. 1(B), communication is performed in the closed state. That is, the control circuit 42 detects the depressing operation of the depressing button 13 for a closed-state communication thereby to stop the operation of the melody or buzzer signaling incoming call generation circuit 45 thereby to stop the melody or buzzer signaling an incoming call, and further operates the signal switching section 61 and also operates the wide gain variable amplifier 62 at a low gain. Accordingly, when a voice signal from a called party is inputted into the communication circuit section 47, the received voice from the called party is outputted to the speaker 23 through the signal switching section 61.

Thus, according to the embodiment, the large-volume speaker 23 is operated to sound with a large volume at the time of sounding a melody or buzzer signaling an incoming call. At the time of communicating in the closed state of the cases, the sounding volume of the large-volume speaker 23 is adjusted in a suppressed state to a level almost equal to the normal sounding volume of the receiver 22. As a result, it becomes possible to obtain such an effect that an echo etc. does not cause on a called party side. Incidentally, in this embodiment, the wide gain variable amplifier 62 is configured to have a wide dynamic range function which operates with a sufficiently small noise level as compared with received voice of a low signal level.

### (4) Shift of communication from the closed-state communication to the opened-state communication

Also in the second embodiment, when the upper and lower cases in the closed state are opened during a communication, the open/close detection switch 41 operates, and so the control circuit 42 detects that the cases are changed from the closed state to the opened state. Thus, the control circuit 42 operates to stop the operation of the wide gain variable amplifier 62 and starts the operation of the small-amplitude amplifier 48 for the receiver thereby to output the received voice from the communication circuit section 47 to the receiver 22.

Accordingly, also in this embodiment, at the time of receiving an incoming call, although a communication is started in the closed state of the cases in order to start the communication rapidly, thereafter it is possible to slowly open the cases thereby to shift to the normal communication

Further, like the second embodiment, the large-volume speaker 23 provided at the outer surface of the upper case 2 is provided near the hinge portion 3 away from the voice conduction hole 12A. Thus, in the case of using the fold type mobile phone according to the invention in the closed state, when a user abuts the large-volume speaker 23 to an ear, the voice conduction hole 12A is disposed closer to a mouth, the usability of the mobile phone at the time of the closed-state communication can be improved.

### [Third Embodiment]

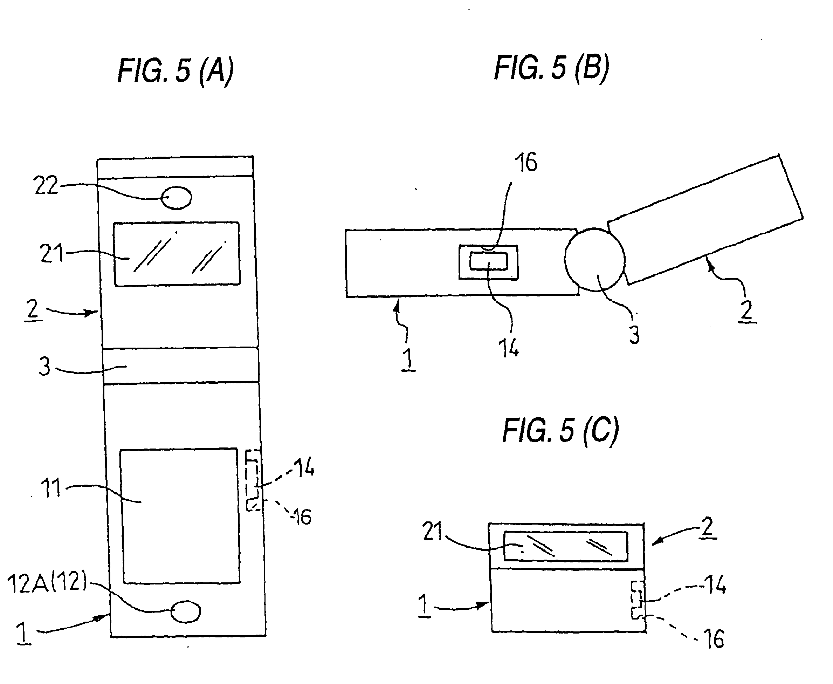

Next, the third embodiment according to the invention will be explained with reference to Fig. 5. In this embodiment, portions identical to those of the first embodiment are referred to by the common symbols, with explanation thereof being omitted.

In each of the first and second embodiments, the depressing button 13 for a closed-state communication has a function of a communication starting operation unit for starting a communication when this button is depressed in the closed state of the cases as shown in Fig. 1 (B). In the mobile phone in each of these embodiments, even when the depressing button 13 for a closed-state communication is depressed during a communication, no particular operation is performed.

On the other hand, according to the mobile phone of the third embodiment, as shown in Fig. 5, a depressing button 14 for a closed-state communication is configured to have a plurality of functions. To be more concrete, the depressing button 14 for a closed-state communication further includes a function of a communication terminating operation unit for terminating a communication when depressed during the communication. Thus, when the depressing button 14 for a closed-state communication is depressed, this button can act as the communication starting operation unit at the time of receiving an incoming call, whilst acts as the communication terminating operation unit at the time of the communication.

Accordingly, a communication can be terminated by depressing the depressing button 14 for a closed-state communication during the communication in the closed state. As a result, both the communication start and termination operations can be performed by the single depressing button 14 for a closed-state communication.

Incidentally, although a state being not an incoming-call receiving state nor a communication state is usually a call waiting state, it is possible to add another function such as a memo key or a shutter key to the depressing button 14 for a closed-state communication in the call waiting state, whereby three or more functions can be added to the single depressing button 14 for a closed-state communication.

### [Fourth Embodiment]

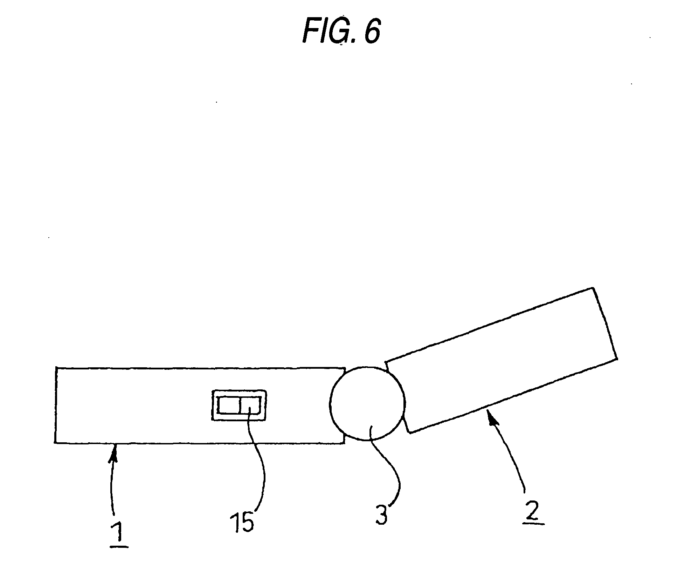

Next, the fourth embodiment according to the invention will be explained with reference to Fig. 6. In this embodiment, portions identical to those of the first and third embodiments are referred to by the common symbols, with explanation thereof being omitted.

The fourth embodiment differs from the third embodiment in a point that a communication start button 15 for a closed state is not configured as a depression type but configured as a slide switch.

For example, in the third embodiment, when a communication is started in the closed state of the cases as shown in Fig. 1(B), the communication can be terminated by depressing the depressing button 14 for a closed-state communication. However, if the depressing button 14 for a closed-state communication is depressed, even when the depressing button 14 for a closed-state communication is touched for a quite short time period erroneously, the depressing button 14 for a closed-state communication operates thereby to terminate the communication.

On the other hand, in the forth embodiment, a communication state is not terminated unless the communication start button 15 for a closed state is pushed and slid in a predetermined direction with an operation force of a certain degree. Thus, this button is not erroneously operated even when it is erroneously touched.

In this embodiment, the communication start button 15 for a closed state is constituted by a slide switch. Alternatively, this switch may be configured to be provided with a determination time period in advance, for example, in a manner that this button is operated by being depressed like that of the third embodiment, but the operation of the button is not made effective when being depressed for a quite short time but is made effective when being depressed continuously (long time pushing) for a particular time period (at least n sends etc.).

Thus, according to the button with such a configuration, the erroneous termination of a communication can be avoided at the time of erroneously depressing this button for a short time period. Further, when this function is applied at the time of starting a communication, it is possible to prevent an erroneous operation at the time of receiving an incoming call even when the communication start button 15 for a closed state is depressed by anything other than a person's operation, for example, by contents within a bag, handbag etc., for example.

### [Fifth Embodiment]

Next, the fifth embodiment according to the invention will be explained with reference to Fig. 5 (simultaneously, also with reference to Fig. 1).

The fifth embodiment shown in Fig. 5 differs from the first embodiment in a point that, unlike the depressing button 13 for a closed-state communication in the first embodiment, the depressing button 14 for a closed-state communication does not protrude outward from the side surface of the lower body case 1 but is disposed within a recess portion 16 provided at the side surface of the lower body case 1.

Thus, according to the fifth embodiment, although it is possible to depress the depressing button 13 for a closed-state communication by a fingertip etc., it is also possible to prevent an erroneous operation due to an erroneous depressing operation caused by erroneously touching the button or an erroneous depressing operation caused by an external subject.

Although the invention has been explained in detail with reference to the particular embodiments, it will be apparent for those skilled in the art that various changes and modifications can be made without departing from the spirit and scope of the invention. For example, even in the case where the display section is positioned at the lower body case, the operation section is positioned at the upper case or both the display section and the operation section are positioned at the same case, the basic operation and effects are same as the aforesaid embodiments.

The invention is based on Japanese Patent Application No. 2002-167360 filed on June 7, 2002, the contents of which is incorporated herein as reference.

### INDUSTRIAL APPLICABILITY

As explained above, the invention relates to the folder type mobile phone according to the invention is arranged in a manner that in the folder type mobile phone in which the first case having the transmission microphone and the second case having the receiver are coupled to each other so as to be opened and closed freely, the folder type mobile phone includes: the speaker provided at the portion of the second case which is exposed when the first and second cases are closed; the volume variable unit for adjusting a sounding volume of the speaker to a level almost same as a sounding volume of the receiver; and the switching unit for switching setting functions in a manner that the first function for communicating by using the transmission microphone and the receiver is set in a case of communicating by opening the first and second cases to each other, and the second function for adjusting a sounding volume of the speaker to a level almost same as a sounding volume of the receiver by the volume variable unit thereby to communicate by using the transmission microphone and the speaker in a case of communicating by closing the first and second cases to each other.

Thus, according to the invention, in the folder type mobile phone, since a sounding volume of received voice and a sounding volume of a melody or buzzer etc. signaling an incoming call can be set suitably, communication can be performed at a suitable volume in the closed state of the cases, whereby it becomes possible to improve the usability of a user.

Further, according to the invention, the folder type mobile phone according to the invention is arranged in a manner that in the folder type mobile phone in which the first case having the transmission microphone and the second case having the receiver are coupled to each other so as to be opened and closed freely, the folder type mobile phone includes: the speaker provided at the portion of the second case which is exposed when the first and second cases are closed; the volume variable unit for adjusting a sounding volume of the speaker to a level almost same as a sounding volume of the receiver; the first button having a function of a first communication starting operation unit and provided at a portion which is not exposed when the first and second cases are closed but exposed in a closed state of the first and second cases; the second button having a function of the second communication starting operation unit and provided at the portion which is exposed when the first and second cases are closed; and the switching unit for switching setting functions in a manner that a first function for communicating by using the transmission microphone and the receiver is set in a case of starting communicating by operating the first button, and the second function for adjusting a sounding volume of the speaker to a level almost same as a sounding volume of the receiver by the volume variable unit thereby to communicate by using the transmission microphone and the speaker in a case of starting communicating by operating the second button.

Thus, according to the invention, it is not necessary to provide a dedicated button for the closed-state communication at the portion which is not exposed when the cases are closed but exposed in the opened state. A plurality of functions, for example, functions such as the start of the closed-state communication and the adjustment of reduction of the sounding volume of the speaker can be set by the second button disposed at the portion which is exposed when the cases are closed. Thus, since the number of the buttons can be reduced as many as possible thereby to intend to save the space, the enlargement of the cases can be avoided and so the invention is suitably applied to mobile phones which tend to be required to be miniaturized increasingly.

## Claims

1. A folder type mobile phone in which a first case having a transmission microphone and a second case having a receiver are coupled to each other so as to be opened and closed freely, the folder type mobile phone, comprising:
a speaker, which is provided at a portion of the second case which is exposed when the first case and the second case are closed;
a volume variable unit which adjusts a sounding volume of the speaker to a level substantially same as a sounding volume of the receiver; and
a switching unit which switches setting functions so that a first function for communicating by using the transmission microphone and the receiver is set in a case of communicating at a state that the first case and the second case are opened to each other, and a second function for communicating by using the transmission microphone and the speaker is set such that the sounding volume of the speaker is adjusted to the level substantially same as the sounding volume of the receiver by the volume variable unit in a case of communicating at a state that the first case and the second case are closed to each other.

2. A folder type mobile phone in which a first case having a transmission microphone and a second case having a receiver are coupled to each other so as to be opened and closed freely, the folder type mobile phone, comprising:
a speaker which is provided at a portion of the second case which is exposed when the first case and the second case are closed;
a volume variable unit which adjusts a sounding volume of the speaker to a level substantially same as a sounding volume of the receiver;
a first button, which has a function of a first communication starting operation unit, and provided at a portion which is not exposed when the first case and the second case are closed but exposed in an opened state of the first case and the second case;
a second button having a function of a second communication starting operation unit and provided at a portion which is exposed when the first case and the second case are closed; and
a switching unit, which switch setting functions so that a first function for communicating by using the transmission microphone and the receiver is set in a case of starting communicating by operating the first button, and a second function for communicating by using the transmission microphone and the speaker is set such that the sounding volume of the speaker is adjusted to the level substantially same as the sounding volume of the receiver by the volume variable unit in a case of starting communicating by operating the second button.

3. The folder type mobile phone according to claim 1 or 2, wherein the transmission microphone is provided at a portion of the first case which is away from a coupling portion of the first and second cases and exposed when the first case and the second case are closed; and
wherein the receiver is provided at a portion of the second case which is away from the coupling portion and covered by the first case when the first case and the second case are closed.

4. The folder type mobile phone according to claim 1 or 2, wherein the switching unit switches to the first function when the first case and the second case are opened to each other in a state that the second function is set.

5. The folder type mobile phone according to claim 1 or 2, wherein the switching unit switches to the second function when the first case and the second case are closed to each other in a state that the first function is set.

6. The folder type mobile phone according to one of claims 2 to 5, wherein the second button has a function of a first communication terminating operation unit for terminating the communication when the second button is operated during communication.

7. The folder type mobile phone according to one of claims 2 to 5, wherein the second button has a function of a second communication terminating operation unit for terminating the communication when the second button is continuously operated for a predetermined time period during communication.

8. The folder type mobile phone according to one of claims 2 to 7, wherein the second button is disposed within a recess portion formed at an outer face of at least one of the first case and the second case.

9. A folder type mobile phone in which a first case and a second case are coupled to each other so as to be opened and closed freely, the folder type mobile phone, comprising:
a speaker, which is provided at a portion of the first and second cases which is exposed when the first case and the second case are closed;
a switching unit, which switches the speaker so that the speaker is available as a receiver at a time of communication; and
an adjusting unit, which adjusts a sounding volume of the speaker to a lower level than a sounding volume at a time of an incoming call in a state of available to use the speaker as the receiver.
